# EUROPEAN PATENT APPLICATION

(11) **EP 3 489 031 A1**
(43) Date of publication of application: **29.05.2019**
(21) Application number: 16903135.8
(22) Date of filing: 26.05.2016
(51) Int. Cl.: B44C 3/02, B32B 9/00

(54) **DECORATIVE SURFACE FORMING MATERIAL AND ARTICLE DECORATED WITH SAME**

(71) Applicant: Kusunoki, Masao, Yokohama-shi, Kanagawa 222-0002 (JP)
(72) Inventor: Kusunoki, Masao, Yokohama-shi, Kanagawa 222-0002 (JP)
(74) Representative: HGF Europe LLP
(86) International application number: PCT/JP2016/065574
(87) International publication number: WO 2017/203653

(57) **Abstract**

Provided is a decorative surface forming material that is superior in hazardous substance adsorption, moisture absorption/desorption, colorability, and fungal resistance. This decorative surface forming material is produced using a design member formed by bonding a decorative surface layer made of lime plaster over a base material sheet, wherein a decorative surface is formed by assembling a plurality of the design members and a sub-design member made of bamboo or rushes in such a manner that raised parts and indented parts are formed in the decorative surface.

## Description

### TECHNICAL FIELD

The present invention relates to a decorative surface forming material that is formed with a design member in which a decorative surface layer made of lime plaster is bonded on a base material sheet and to an article that is decorated by using this decorative surface forming material so as to coat the outside surface and the like of the article.

### BACKGROUND ART

Lime plaster is obtained by adding an appropriate admixture to hydrated lime (calcium hydroxide) and kneading them with water, and has been used for a long period of time in Japan as a finishing material for a clay wall. In recent years, due to a lack of excellent daubers, wallpaper made of vinyl chloride or the like with which work is easily performed and which is inexpensive has been widely used as a finishing material for indoor wall surfaces, ceiling surfaces and the like.

However, wallpaper made of vinyl chloride or the like and an adhesive used for adherence thereof include a plasticizer and a large number of hazardous substances, and in particular, it is considered as a problem that hazardous substances such as formaldehyde and toluene harm human health.

On the other hand, lime plaster does not emit the hazardous substances described above, is also excellent in the adsorption of these hazardous substances and has high moisture absorption/desorption and fungal resistance.

Hence, for example, as disclosed in patent documents 1 to 3, building materials of an indoor wall surface, a ceiling surface and the like are developed that have a surface layer containing, in the surface of a sheet or a board, as a bonding ingredient, calcium carbonate which is the main ingredient of lime plaster.

As disclosed in patent document 4, as a three-dimensional coloring structure which is useful as a craft, a figurine, building interior and exterior wall materials, a ceiling material or the like, a three-dimensional coloring design structure is also known which is formed of lime plaster on a porous board and in which a three-dimensional model where part or the whole of its surface is colored with watercolor paints is formed.
Patent Document 1: Japanese Unexamined Patent Application, Publication No. H08-244159
Patent Document 2: Japanese Unexamined Patent Application, Publication No. H08-72195
Patent Document 3: Japanese Patent No. 3026604
Patent Document 4: Japanese Unexamined Patent Application, Publication No. 2014-221546

### DISCLOSURE OF THE INVENTION

### Problems to be Solved by the Invention

In recent years, in the fields of buildings and indoor interiors, attention has been focused on the "Japanese style modern" in which a design is typical that gives a simplified and sharp impression in collaboration with Japanese traditional beauty and a western style. Lime plaster is a material which has been used for Japanese traditional buildings and which is suitable for realizing the Japanese style modern because it has the effect of healing and comfort resulting from its unique texture and touch and furthermore a subtle shadow produced by fusion of soft light and the like.

However, in multilayer members and building materials as disclosed in patent documents 1 to 3, a uniformly thick lime plaster layer is formed on the surface of a base material so as to reproduce a lime plaster wall which is troweled, and thus a pure Japanese style sense is strongly provided, with the result that the novelty of design is poor in terms of the Japanese style modern. In these building materials, the exposed surface of lime plaster is basically flat, and thus the function of adsorbing hazardous substances as described above and the function of adjusting moisture are performed only through the flat part. Furthermore, in these building materials, it is difficult to work after the surface lime plaster layer is cured, and for example, when it is applied to a curved surface after the lime plaster is cured, the lime plaster layer may be cracked. Naturally, when work is performed while the lime plaster is flexible, the occurrence of a crack is prevented but when it is applied to a curved surface having a large curvature, the lime plaster layer may be deformed so as to have an uneven thickness.

On the other hand, in the three-dimensional coloring design structure disclosed in patent document 4, for example, a three-dimensional model which is formed by raising lime plaster including an inorganic fine aggregate is retained, and thus as a board, a relatively thick porous board needs to be used (in an example, a board whose thickness is 20 mm is used), with the result that an application target is limited.

Hence, an object of the present invention is to provide a decorative surface forming material which can easily be applied not only to an indoor wall surface and a ceiling surface but also to the surfaces of various shapes such as a tea can, a dressing box and a figurine, which can provide the atmosphere of the Japanese style modern by the applications and which can more effectively achieve excellent functions such as a hazardous substance adsorption function, a moisture adjustment function and a fungal resistance function provided by lime plaster, and also to provide articles such as a tea can, a dressing box and a figurine which are decorated with the decorative surface forming material.

### Means for Solving the Problems

According to the present invention, the object described above is achieved as follows.
(1) A decorative surface forming material is provided which is formed with a design member formed by bonding a decorative surface layer made of lime plaster on a base material sheet, and in which a decorative surface is formed by assembling a plurality of the design members so as to form recesses and projections in the decorative surface.

In the configuration described above, shadows which are produced by the recesses and projections formed by assembling a plurality of design members having the decorative surface layer made of the lime plaster provide the rich expression of the decorative surface, and furthermore, such as by a sense of rhythm generated by the regular arrangement of the shadows and the design members caused by the patterning of the assembly, it is possible to provide a taste of the Japanese style modern to an article to be decorated.

When the design members are assembled, by gaps formed inevitably or deliberately between the design members, the flexibility of the deformation of the decorative surface forming material can be enhanced. Specifically, as indicated in section (7) which will be discussed later, a description will be given of an example where a base sheet is adhered to a back surface which is a side opposite to the decorative surface of the decorative surface forming material, and when a flexible base sheet is used, the flexibility of the design member is lost by the curing of the lime plaster, and the flexibility of part of the base sheet which is adhered to the design member is also lost but the flexibility of the base sheet present in the foundation of the gap parts is not lost, with the result that the decorative surface forming material can be bent. Then, even when the decorative surface forming material is bent, due to the presence of the gaps, it is possible to avoid a problem in which the design members collide with each other so as to be damaged. Hence, according to the decorative surface forming material of the present invention, it is possible to easily apply the present invention not only to an indoor wall surface and a ceiling surface having a planar shape but also to a tea can, a dressing box, a figurine and the like which have the surfaces of various shapes such as a curved surface. For example, in a case where the decorative surface forming material is assumed to be adhered to a surface having a large curvature such as the side surface of a cylindrical part of a tea can, even when the building materials disclosed in patent documents 1 to 3 are used, if they are used in a state where a lime plaster layer is flexible, the lime plaster layer is deformed according to the shape of the surface of the tea can, and thus the decorative surface forming material can be adhered. However, in this case, an uneven thickness is inevitably produced by the deformation. By contrast, in the decorative surface forming material of the present invention, since the gaps have a buffer function, even when it is used before the curing of the lime plaster, it is unlikely that such an uneven thickness is produced.

Furthermore, the property of being able to bend the decorative surface forming material after the curing of the lime plaster layer means that a period after the manufacturing of the decorative surface forming material until it is used is long. For example, when the decorative surface forming material is assumed to be adhered to a curved surface having a large curvature as described above, the period during which the building materials can be used is limited to a period during which the lime plaster layer has appropriate flexibility whereas in the decorative surface forming material of the present invention, even in a state where the lime plaster layer is cured, the number of design members is increased, and thus the decorative surface forming material can be finely adhered even if the width of the gaps is decreased.

Furthermore, in the decorative surface forming material of the present invention, the functions of the adsorption of hazardous substances within a room or within a predetermined space and the adjustment of moisture which are originally included in the decorative surface layer made of the lime plaster in the design member are more effectively achieved because a plurality of design members are assembled so as to form the decorative surface and recesses and projections in the decorative surface, and thus the contact area of the atmosphere is increased. The decorative surface layer made of the lime plaster has satisfactory coloring, fungal resistance and weather resistance, and thus it is possible to obtain an excellent decorative surface forming material.

As the design member in the decorative surface forming material of the present invention, the multilayer member disclosed in patent document 1 described above, the multilayer member manufactured by the manufacturing method disclosed in patent document 2 described above, the building materials disclosed in patent document 3 described above and the like are appropriately cut into necessary shapes and sizes such as tape-shaped pieces and small pieces so as to be able to be used.
(2) In section (1) described above, the decorative surface is formed with both the design member formed by bonding the decorative surface layer made of the lime plaster on the base material sheet and a sub-design member made of a material other than the lime plaster.
   In the configuration described above, the decorative surface is formed with both the lime plaster and the material other than the lime plaster, and thus the decoration of the decorative surface is more enhanced.
(3) In section (2) described above, the design member formed by bonding the decorative surface layer made of the lime plaster on the base material sheet is a tape-shaped design member, the sub-design member made of the material other than the lime plaster is a long sub-design member, the design member is used as a warp kitting member or a weft knitting member and the sub-design member is used as the weft knitting member or the warp kitting member and the design member and the sub-design member are woven so as to be assembled such that the decorative surface having the recesses and projections is formed.
   In the configuration described above, the tape-shaped design member and the long sub-design member are woven, and thus the recesses and projections of the decorative surface and the decoration of the decorative surface are more enhanced.
(4) In section (3) described above, the sub-design member made of the material other than the lime plaster is formed of rush or string-shaped or tape-shaped bamboo or is formed of both the rush and the string-shaped or tape-shaped bamboo, and is used as the single weft knitting member or the single warp kitting member, and a single or a plurality of the sub-design members are used so as to be woven.
   In the configuration described above, the decorative surface is formed with the lime plaster and the rush or string-shaped or tape-shaped bamboo or both thereof, and thus the recesses and projections of the decorative surface are more widely varied and the decoration is more excellent.
(5) In section (1) described above, the design member formed by bonding the decorative surface layer made of the lime plaster on the base material sheet is a tape-shaped design member, and the tape-shaped design members are woven as a warp kitting member and a weft knitting member so as to be assembled such that the decorative surface having the recesses and projections is formed.
   In the configuration described above, both the warp kitting member and the weft knitting member are the tape-shaped design members, and thus it is easy to weave and assemble the design members.
(6) In section (5) described above, the design member formed by bonding the decorative surface layer made of the lime plaster on the base material sheet is used as the warp kitting member and the weft knitting member, the warp kitting member and the weft knitting member are colored in different colors and the design members are woven so as to be assembled such that the decorative surface is checkered.
   In the configuration described above, it is possible to easily form the decorative surface which is checkered.
(7) In section (1) described above, a base sheet is adhered to a back surface which is a side opposite to the decorative surface of the decorative surface forming material described in any one of sections (2) to (6) discussed above.
   In the configuration described above, when the outside or the inside of an article is coated with the decorative surface forming material, the operation can easily be performed through the base sheet. Specifically, when the outside or the like of the article is coated either by applying an adhesive to the base sheet or by previously applying the adhesive to the base sheet and adhering a separation sheet to the upper side thereof, the coating operation can easily be performed by separating the separation sheet.
(8) In section (1) described above, the decorative surface forming material described in any one of sections (2) to (6) discussed above is adhered to both side surfaces of a base sheet such that the decorative surface layer made of the lime plaster is the decorative surface.
   In the configuration described above, for example, when the housing of an article is formed of the decorative surface forming material described in any one of sections (2) to (6) discussed above which is adhered to both side surfaces of the base sheet, the article in which both the outside and the inside of the housing are decorated can easily be provided.
(9) In section (1) described above, the design member formed by bonding the decorative surface layer made of the lime plaster on the base material sheet is tape-shaped, on the decorative surface layer made of the lime plaster in the tape-shaped design member, small pieces of the design member are adhered at predetermined intervals and a plurality of the tape-shaped design members to which the small pieces are adhered are assembled and adhered on a base sheet such that the decorative surface having the recesses and projections is formed.
   In the configuration described above, without the tape-shaped design members being woven, the tape-shaped design members are assembled on the base sheet, and thus it is possible to provide the decorative surface forming material in which the decorative surface having the recesses and projections is provided.
(10) In section (9) described above, the tape-shaped design members to which the small pieces of the design member are adhered at the predetermined intervals are assembled and adhered on the base sheet such that the small pieces are arranged so as to be checkered.
   In the configuration described above, without the tape-shaped design members being woven, the tape-shaped design members are assembled on the base sheet, and thus it is possible to provide the decorative surface forming material in which the decorative surface is checkered.
(11) An article is provided which is decorated by coating the outside or the inside of the article or at least part of the surfaces of the outside and the inside with the decorative surface forming material described in any one of sections (1) to (10) discussed above or by forming the housing of the article with the decorative surface forming material described in any one of sections (1) to (10) discussed above.
   In the configuration described above, it is possible to provide the article which is excellent in decoration and which has the function of adsorbing hazardous substances, a moisture absorption/desorption function and a fungal resistance function.
(12) In section (11) described above, the article which is decorated is any one of a tea can, a dressing can, a dressing box, a jewelry box, a sewing box, a costume box, a shoe box, a chopstick box, a tissue paper box, a savings box, a first-aid kit, a hand box, a figurine and a picture frame.

In the configuration described above, it is possible to provide a large number of daily articles which are excellent in decoration and which have the function of adsorbing hazardous substances, a moisture absorption/desorption function and a fungal resistance function.

### Effects of the Invention

The decorative surface forming material of the present invention can provide the excellent features of lime plaster to an article to be decorated, and can simultaneously provide the taste of the Japanese style modern. In the decorative surface forming material of the present invention, by the presence of gaps formed inevitably or deliberately between design members, the flexibility of the deformation of the decorative surface forming material can be enhanced. In this way, it is possible to easily apply the present invention not only to an indoor wall surface and a ceiling surface having a planar shape but also to a tea can, a dressing box, a figurine and the like which have the surfaces of various shapes such as a curved surface. Furthermore, due to the property in which the decorative surface forming material of the present invention can be bent after the curing of a lime plaster layer, a period which elapses after the manufacturing of the decorative surface forming material until the use thereof, that is, an inventory period can be extended.

As described above, according to the present invention, it is possible to efficiently contribute to the adsorption of hazardous substances within a room or within a predetermined space and the adjustment of moisture and to provide the decorative surface forming material which is excellent in coloring and fungal resistance and a large number of daily articles such as a tea can, a dressing box, a figurine and the like using this decorative surface forming material.

### BRIEF DESCRIPTION OF THE DRAWINGS

Fig. 1 is a flowchart showing a process for manufacturing a sheet-shaped article which is the base paper sheet of a design member used in the present invention.
Fig. 2 is an enlarged cross-sectional view of the sheet-shaped article.
Fig. 3 shows a first example of the decorative surface forming material of the present invention, Fig. 3(a) is a surface view, Fig. 3(b) is a back view and Fig. 3(c) is an enlarged cross-sectional view taken along line A-A in Fig. 3(a).
Fig. 4 shows a tea can whose outside surface is coated with the decorative surface forming material shown in Fig. 3 and which is thereby decorated, Fig. 4(a) is an upper perspective view and Fig. 4(b) is a lower perspective view.
Fig. 5 shows a second example of the decorative surface forming material of the present invention, Fig. 5(a) is a surface view, Fig. 5(b) is a back view and Fig. 5(c) is an enlarged cross-sectional view taken along line A-A in Fig. 5(a).
Fig. 6 shows a tea can whose outside surface is coated with the decorative surface forming material shown in Fig. 5 and which is thereby decorated, and Figs. 6(a) and 6(b) are upper perspective views which are individually seen in different directions.
Fig. 7 shows a third example of the decorative surface forming material of the present invention, Fig. 7(a) is a surface view, Fig. 7(b) is a partially exploded back view and Fig. 7(c) is an enlarged cross-sectional view taken along line A-A in Fig. 7(a).
Fig. 8 shows a dressing box whose outside surface is coated with the decorative surface forming material shown in Fig. 7 and which is thereby decorated.
Fig. 9 shows a fourth example of the decorative surface forming material of the present invention, Fig. 9(a) is a surface view, Fig. 9(b) is a back view and Fig. 9(c) is an enlarged cross-sectional view taken along line A-A in Fig. 9(a).
Fig. 10 shows a fifth example of the decorative surface forming material of the present invention, Fig. 10(a) is a surface view, Fig. 10(b) is a back view and Figs. 10(c) and 10(d) are respectively enlarged cross-sectional views taken along lines A-A and B-B in Fig. 10(a).
Fig. 11 shows a tissue paper box whose outside surface is coated with the decorative surface forming material of a sixth example of the present invention and which is thereby decorated, Fig. 11(a) is an upper perspective view and Figs. 11(b) and 11(c) are respectively enlarged cross-sectional views taken along lines A-A and B-B in Fig. 11(a).
Fig. 12 is an upper perspective view of a basket whose housing is formed of the decorative surface forming material of the present invention.
Fig. 13 is an upper perspective view of a jewelry box which is decorated with the decorative surface forming material shown in Fig. 5.
Fig. 14 is an upper perspective view of a hand box which is decorated with the decorative surface forming material of another form of the present invention.
Fig. 15 is an upper perspective view of a picture frame which is decorated with the decorative surface forming material of the present invention.
Fig. 16 is an upper perspective view of a crocodile serving as a figurine whose outside surface is decorated with the decorative surface forming material of the present invention.

### PREFERRED MODE FOR CARRYING OUT THE INVENTION

The present invention will be described below using typical embodiments of the present invention. The present invention provides a decorative surface forming material which is formed with a design member formed by bonding a decorative surface layer made of lime plaster on a base material sheet, and in which a decorative surface is formed by assembling a plurality of the design members so as to form recesses and projections in the decorative surface. The present invention also provides an article which is decorated by coating surfaces such as an outside with the decorative surface forming material.

The design member formed by bonding the decorative surface layer made of lime plaster on the base material sheet is obtained as follows.

Lime plaster is generally obtained by adding, to calcium hydroxide, fibers, a pigment and an appropriate admixture as necessary and mixing them with water, and, as described previously, has been used for a long period of time in Japan as a paint wall material.

Calcium hydroxide which is the main ingredient of the lime plaster absorbs carbon dioxide in air so as to react therewith, and is changed into calcium carbonate as time passes, with the result that the lime plaster is cured. Hence, in the present invention, the decorative surface layer made of the lime plaster refers to a layer whose main ingredients are calcium hydroxide and calcium carbonate, which is mixed with an admixture such as a pigment as necessary and which is cured.

The design member formed by bonding the decorative surface layer made of the lime plaster described above on the base material sheet is obtained as follows. Specifically, a pasty mixture which is obtained by adding and kneading calcium hydroxide and water and an admixture such as a pigment as necessary is applied on the base material sheet having a large area, is thereafter compressed by a high pressure so as to have a high density, is subjected to a dry step and is then wound after a curing sheet is stacked on the surface of a lime plaster layer, with the result that a sheet-shaped article having a large area is obtained as the base paper sheet of the design member used in the present invention. Although the material of the base material sheet is not particularly limited, a paper sheet having an appropriate thickness or the like is preferably used.

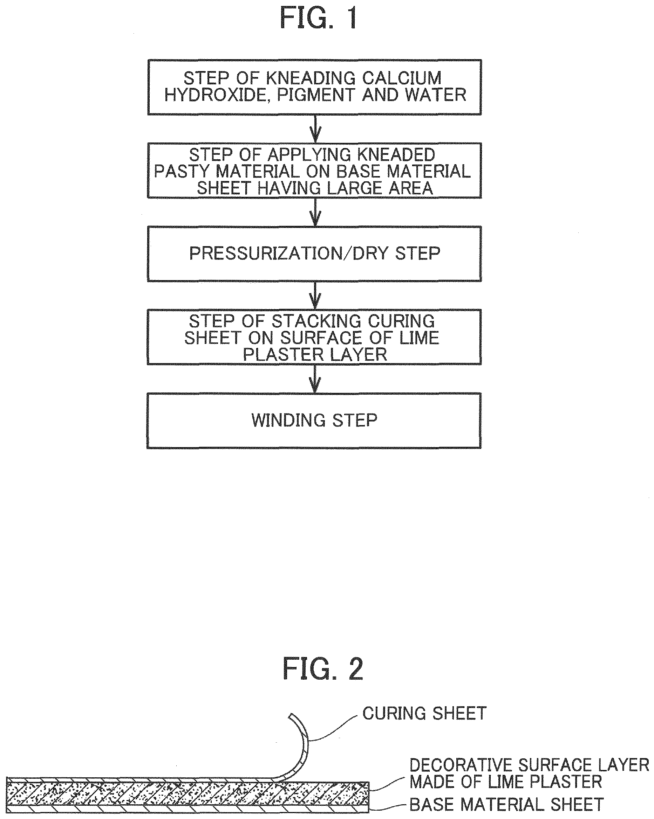

Fig. 1 is a flowchart showing a process for manufacturing the sheet-shaped article. Fig. 2 is an enlarged cross-sectional view of the sheet-shaped article. However, the curing sheet is shown in a state where part thereof is separated.

The design member used in the present invention, that is, the design member formed by bonding the decorative surface layer made of the lime plaster on the base material sheet is obtained by cutting the sheet-shaped article serving as the base paper sheet and having a large area into tape-shaped pieces and then separating the curing sheet. A reaction rate of calcium hydroxide which is the main ingredient of the lime plaster and carbon dioxide in air is low with the lime plaster coated with the curing sheet so as to be about 60%, and thus it is in a relatively soft state. After the separation of the curing sheet, the reaction proceeds, and after one month, the reaction rate is about 90%, with the result that about the pencil hardness of H is achieved. Hence, when a plurality of tape-shaped design members described above are used, and thus an assembly such as weaving in the present invention is performed, with consideration given to ease of the operation, the assembly is preferably performed when the lime plaster has an appropriate hardness.

As described previously, the lime plaster in the design member has the property of adsorbing hazardous substances such as formaldehyde and toluene, and does not emit the hazardous substances once they are adsorbed. The lime plaster is also excellent in the moisture absorption/desorption function for moisture in air. Furthermore, the lime plaster is excellent in coloring and weather resistance, and has fungal resistance. In general, it is known that when a pH exceeds 10, the fecundity of fungi is almost lost. The lime plaster has a pH of about 12, and thus it is considered that this alkalinity contributes to the significant fungal resistance effect.

In the decorative surface forming material of the present invention, the decorative surface is formed by assembling a plurality of design members described above so as to form recesses and projections in the decorative surface.

In the decorative surface forming material of a first group of the present invention, a decorative surface is formed with both a design member formed by bonding a decorative surface layer made of lime plaster on a base material sheet and a sub-design member made of a material other than the lime plaster. In a preferable typical form, the design member is a tape-shaped design member and the sub-design member is a long sub-design member, the design member is used as a warp kitting member or a weft knitting member and the sub-design member is used as the weft knitting member or the warp kitting member and the design member and the sub-design member are woven so as to be assembled such that the decorative surface having recesses and projections is formed. Specifically, the sub-design member is formed of rush or string-shaped or tape-shaped bamboo or is formed of both thereof, and is used as the single weft knitting member or the single warp kitting member and a single or a plurality of sub-design members are used so as to be woven.

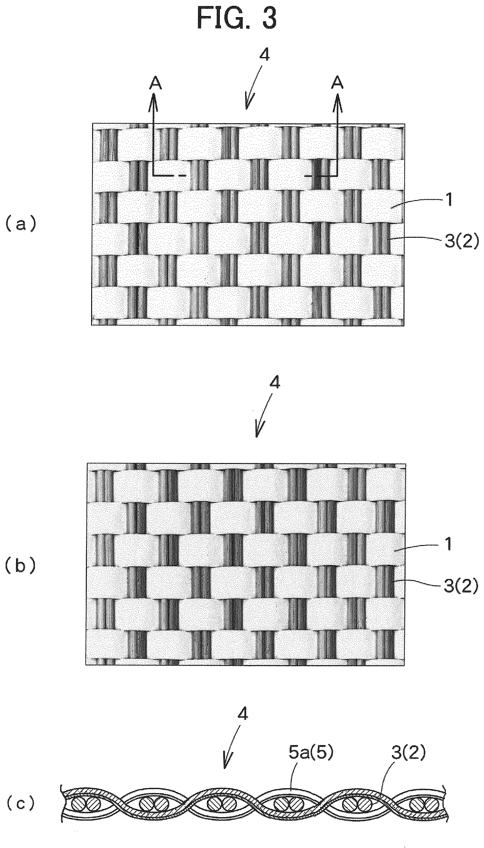

The design member 1 is used as the weft knitting member, a single warp kitting member formed with two pieces of string-shaped thick bamboo 3 is used as the sub-design member 2 and they are woven so as to form a decorative surface, and Fig. 3 shows a decorative surface forming material 4 in which the decorative surface is formed, Fig. 3(a) is a surface view, Fig. 3(b) is a back view and Fig. 3(c) is an enlarged cross-sectional view taken along line A-A in Fig. 3(a). As is clear from these drawings, since the side surfaces 5a of a lime plaster layer 5 in each of the tape-shaped design members 1 are sufficiently brought into contact with air, as compared with a form in which the lime plaster layer is simply bonded on one large sheet, it is possible to highly efficiently contribute to the adsorption of hazardous substances within a room or within a predetermined space and the adjustment of moisture.

In general, when the lime plaster layer is simply bonded on one large sheet, the part of the lime plaster that is brought into contact with air is substantially only the surface of the lime plaster layer in the front and back surfaces of the lime plaster on the side which is not bonded to the sheet, and the area of the side surfaces of the lime plaster layer is slight as compared with the area of the surface of the lime plaster layer. However, in the present invention, a plurality of number of design members obtained by cutting the design member into tape-shaped pieces are used, and thus as a whole, the area of the side surfaces of the lime plaster layer is significantly increased. The area of the side surfaces is increased, and thus it is possible to highly efficiently contribute to the adsorption of hazardous substances within a room or within a predetermined space and the adjustment of moisture. Although an influence caused by the thickness of the lime plaster layer is exerted, in particular, when the width of the design member which is cut to have the tape shape is equal to or less than 15 mm, is preferably equal to or less than 10 mm and is further equal to or less than 10 mm, it is possible to highly efficiently contribute to the adsorption of hazardous substances and the adjustment of moisture. The lime plaster is excellent in coloring and fungal resistance, and thus it is possible to provide the satisfactory decorative surface forming material 4.

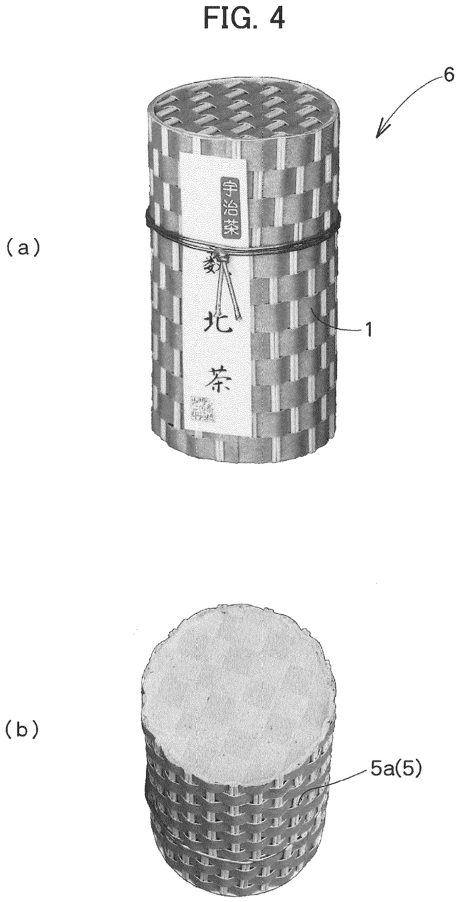

Fig. 4 shows a tea can 6 whose outside surface is coated with the decorative surface forming material 4 shown in Fig. 3 and which is thereby decorated. Fig. 4(a) is an upper perspective view, and Fig. 4(b) is a lower perspective view. As is clear from these drawings, the side surfaces 5a of the lime plaster layer 5 in each of the tape-shaped design members 1 are sufficiently brought into contact with air.

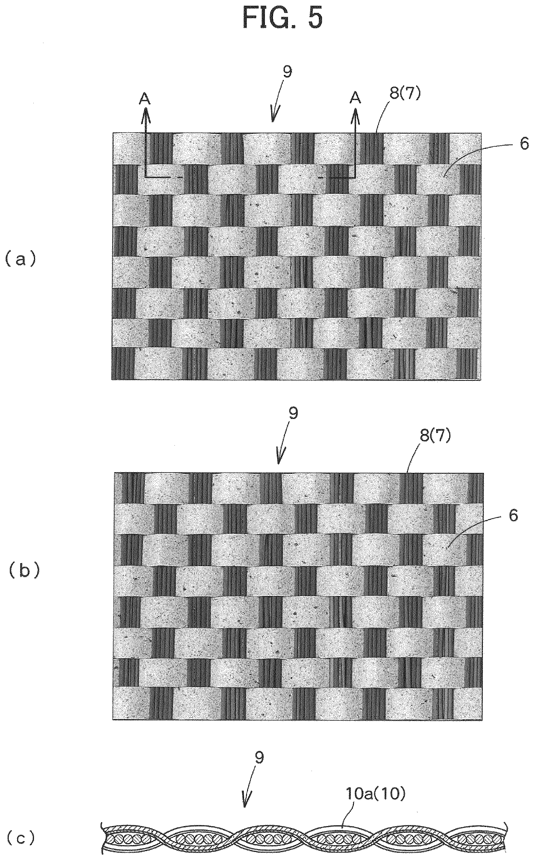

The design member 1 is used as the weft knitting member, a single warp kitting member formed with five pieces of rush 8 is used as a sub-design member 7 and they are woven so as to form a decorative surface, and Fig. 5 shows a decorative surface forming material 9 in which the decorative surface is formed, Fig. 5(a) is a surface view, Fig. 5(b) is a back view and Fig. 5(c) is an enlarged cross-sectional view taken along line A-A in Fig. 5(a). As is clear from these drawings, the side surfaces 10a of a lime plaster layer 10 in each of the tape-shaped design members 6 are sufficiently brought into contact with air.

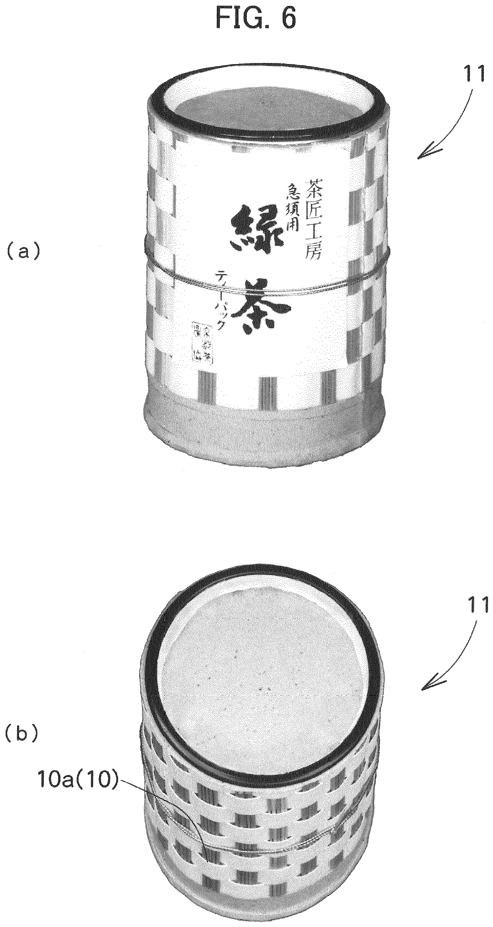

Fig. 6 shows a tea can 11 in which part of an outside surface, that is, a tubular surface is coated with the decorative surface forming material 9 shown in Fig. 5 and which is thereby decorated. Figs. 6(a) and 6(b) are upper perspective views which are individually seen in different directions.

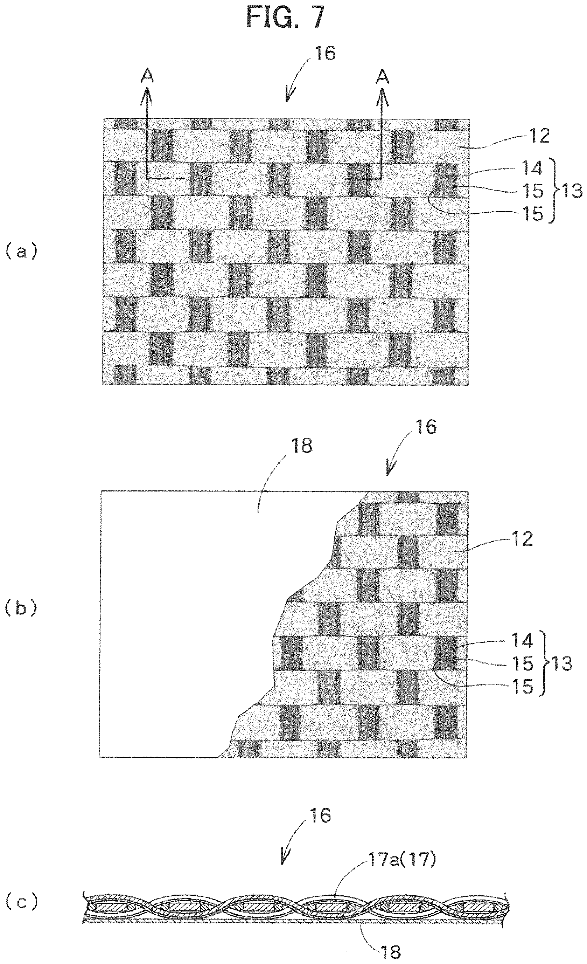

A design member 12 is used as the weft knitting member, a single warp kitting member formed with one piece of tape-shaped bamboo 14 and two pieces of rust 15 is used as a sub-design member 13 and they are woven so as to form a decorative surface, and Fig. 7 shows a decorative surface forming material 16 in which the decorative surface is formed, Fig. 7(a) is a surface view, Fig. 7(b) is a back view and Fig. 7(c) is an enlarged cross-sectional view taken along line A-A in Fig. 7(a). As is clear from these drawings, the side surfaces 17a of a lime plaster layer 17 in each of the tape-shaped design members 12 are sufficiently brought into contact with air.

In the decorative surface forming material 16 shown in Fig. 7, a base sheet 18 is adhered to a back surface which is a side opposite to the decorative surface. The base sheet 18 makes it easy to perform coating by applying an adhesive to the base sheet 18 when the outside surface or the inside surface of the article is coated with the decorative surface forming material 16. Preferably, in the base sheet 18, the adhesive is previously applied to both sides as in a double-sided adhesive tape, the separation sheet of the base sheet 18 is separated and thus the coating operation of the decorative surface forming material 16 on the outside surface of the article and the like is facilitated.

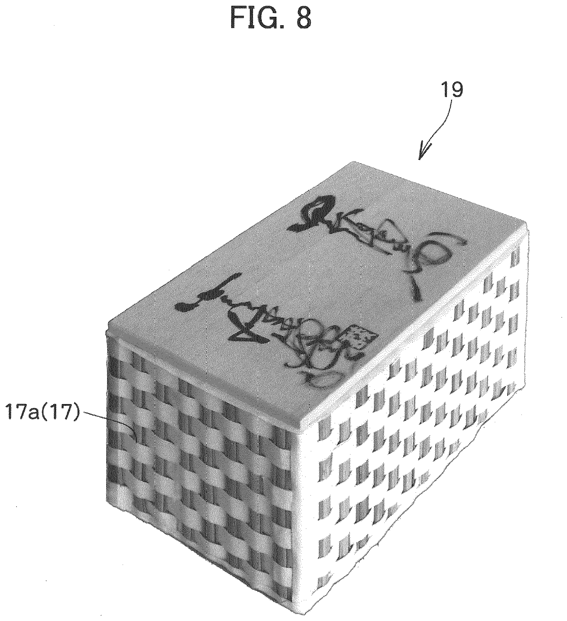

Fig. 8 shows a dressing box 19 whose outside surface is coated with the decorative surface forming material 16 shown in Fig. 7 and which is thereby decorated.

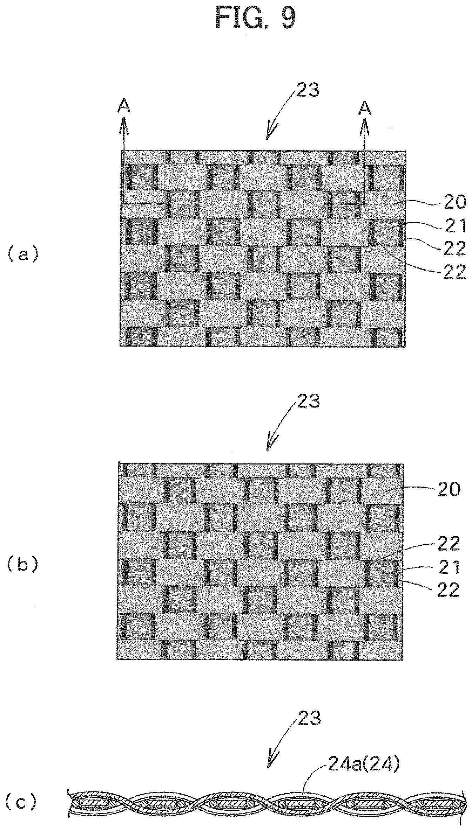

A design member 20 is used as the weft knitting member, a design member 21 and two pieces of string-shaped bamboo 22 are used as the warp kitting member and they are woven so as to form a decorative surface, and Fig. 9 shows a decorative surface forming material 23 in which the decorative surface is formed, Fig. 9(a) is a surface view, Fig. 9(b) is a back view and Fig. 9(c) is an enlarged cross-sectional view taken along line A-A in Fig. 9(a). As is clear from these drawings, the side surfaces 24a of a lime plaster layer 24 in each of the tape-shaped design members 20 are sufficiently brought into contact with air.

In the decorative surface forming material of a second group of the present invention, both the weft knitting member and the warp kitting member are woven with design members formed by bonding a decorative surface layer made of lime plaster on a base material sheet, and thus a decorative surface is formed.

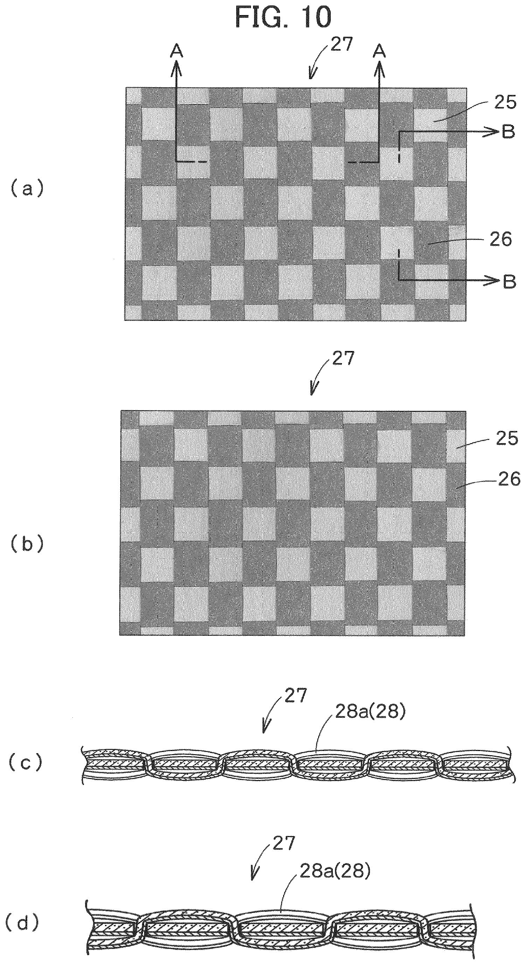

As the weft knitting member and the warp kitting member, design members 25 and 26 are used and are woven so as to form a decorative surface, and Fig. 10 shows a decorative surface forming material 27 in which the decorative surface is formed, Fig. 10(a) is a surface view, Fig. 10(b) is a back view and Figs. 10(c) and 10(d) are respectively enlarged cross-sectional views taken along lines A-A and B-B in Fig. 10(a). As is clear from these drawings, the side surfaces 28a and 29a of lime plaster layers 28 and 29 in the individual tape-shaped design members 25 and 26 are sufficiently brought into contact with air. In the present embodiment, the design member 25 of the weft knitting member and the design member 26 of the warp kitting member are colored in different colors, and thus the decorative surface can easily be checkered.

In the decorative surface forming material of a third group of the present invention, a design member formed by bonding a decorative surface layer made of lime plaster on a base material sheet is tape-shaped, on the decorative surface layer made of lime plaster in the tape-shaped design member, small pieces of the design member are adhered at predetermined intervals, a plurality of tape-shaped design members to which the small pieces are adhered are assembled and adhered on a base sheet and thus a decorative surface having recesses and projections is formed.

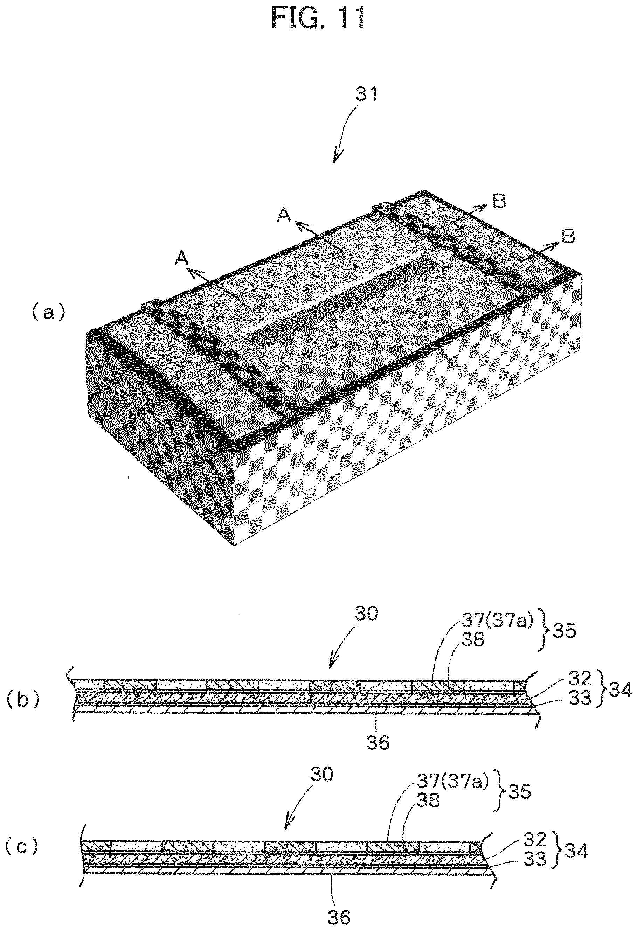

Fig. 11 shows a tissue paper box 31 whose outside surface is coated with the decorative surface forming material 30 of the third group and which is thereby decorated, Fig. 11(a) is an upper perspective view and Figs. 11(b) and 11(c) are respectively enlarged cross-sectional views taken along lines A-A and B-B in Fig. 11(a). These enlarged cross-sectional views are shown such that the main body of the tissue paper box 31 before being coated with the decorative surface forming material 30 is omitted.

In the present embodiment, on a decorative surface layer 32 made of lime plaster in a tape-shaped design member 34 formed by bonding the decorative surface layer 32 made of the lime plaster on a base material sheet 33, square-shaped small pieces 35 are adhered at predetermined intervals, and the design members are assembled and adhered on a base sheet 36 such that the small pieces 35 are arranged so as to be checkered. The small pieces 35 themselves are formed by bonding a decorative surface layer 37 made of the lime plaster on a base material sheet 38. The base sheet 36 is one sheet which is as large as the decorative surface forming material 30, and functions to prevent a plurality of tape-shaped design members 34 which are assembled and adhered on the base sheet 36 from being separated. The base sheet 36 is useful for facilitating a coating operation by applying an adhesive to the base sheet 36 when the outside surface of the article and the like are coated with the decorative surface forming material 30. As is clear from Figs. 11(a) and 11(b), the side surfaces 37a of a lime plaster layer 37 in the square-shaped small pieces 35 made of the design member are sufficiently brought into contact with air.

The present invention also provides the article in which the outside or the inside thereof or at least part of the surfaces of both of them is coated with the decorative surface forming material described in any one of the embodiments of the first to third groups illustrated in Figs. 4, 6, 8 and 11 and which is thereby decorated.

Furthermore, the present invention also provides the article whose housing is formed of the decorative surface forming material described in any one of the embodiments of the first to third groups and which is thereby decorated.

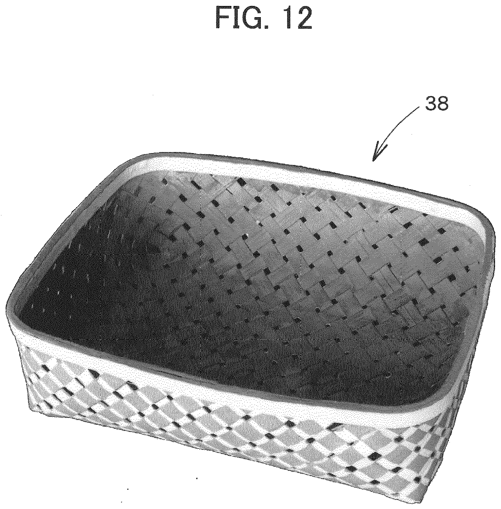

Fig. 12 shows an example where the housing of an article is formed of the decorative surface forming material of the present invention such that a basket 38 is provided.

Although not shown in the figure, in another embodiment of the decorative surface forming material of the present invention, the decorative surface forming material described in any one of the embodiments of the first to third groups is adhered to both side surfaces of a base sheet such that a decorative surface layer made of lime plaster is a decorative surface. Preferably, for example, the decorative surface forming material described above is used so as to form the basket as shown in Fig. 12.

Although the articles which are decorated with the decorative surface forming material of the present invention are not particularly limited, typical examples thereof whose part has already been illustrated include a tea can, a dressing can, a dressing box, a jewelry box, a sewing box, a costume box, a shoe box, a chopstick box, a tissue paper box, a savings box, a first-aid kit, a hand box, a figurine and a picture frame.

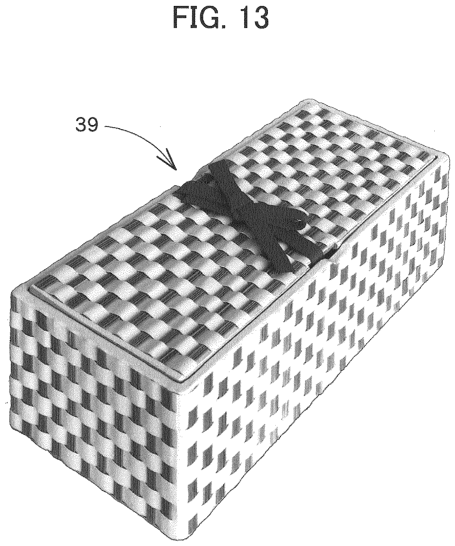

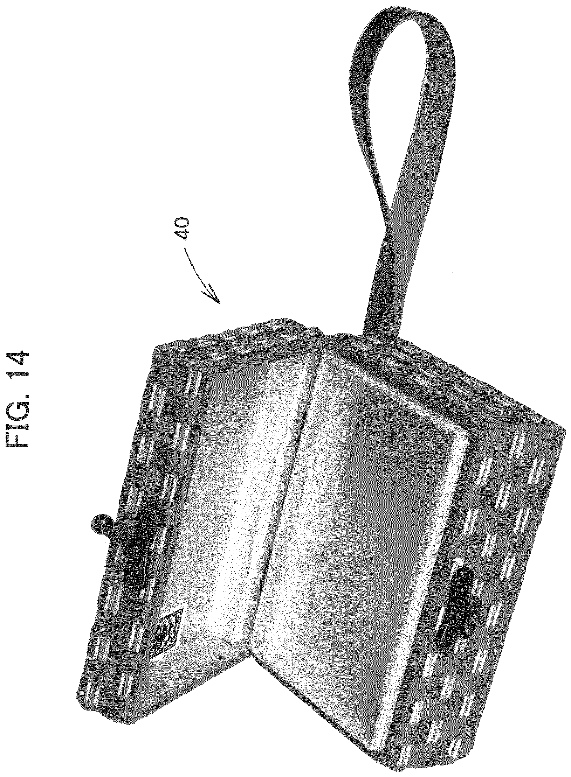

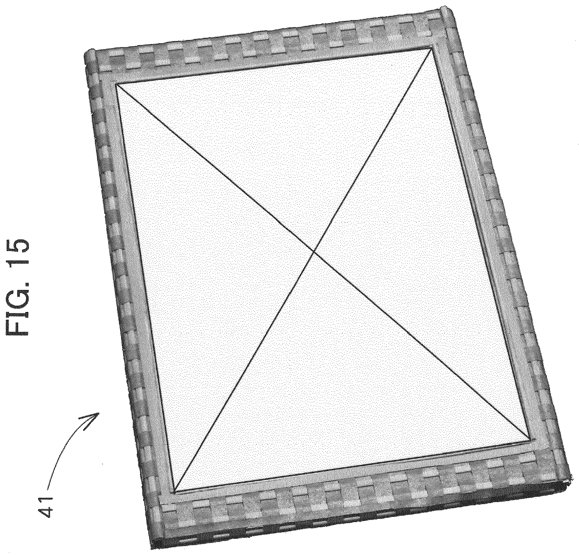

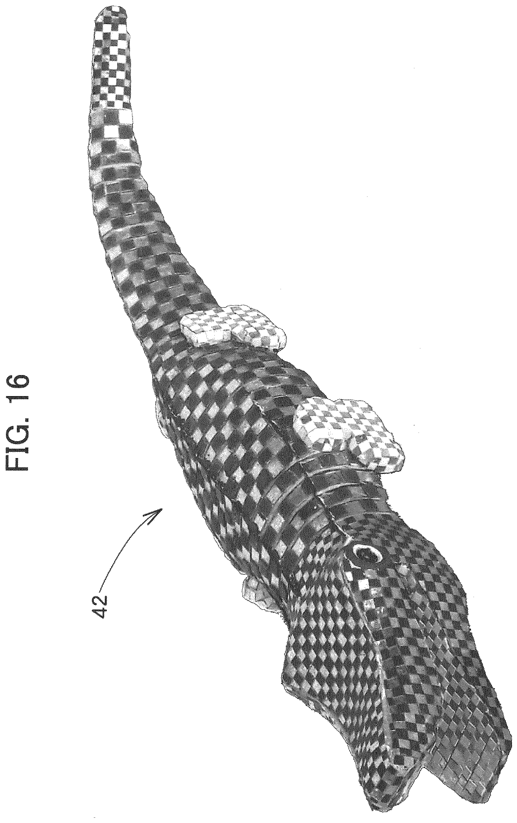

Fig. 13 is an upper perspective view of a jewelry box 39 which is decorated with the decorative surface forming material 9 shown in Fig. 5, Fig. 14 is an upper perspective view of a hand box 40 which is decorated with the decorative surface forming material of another form of the present invention and Fig. 15 is likewise an upper perspective view of a picture frame 41 which is formed of the decorative surface forming material of the present invention. Fig. 16 is an upper perspective view of a crocodile 42 serving as a figurine whose outside surface is decorated with the decorative surface forming material of the present invention.

As described above, the decorative surface forming material of the present invention can be widely used in order to decorate various articles, and the articles which are decorated with the decorative surface forming material are useful for the adsorption of hazardous substances such as formaldehyde and toluene produced from wallpaper made of vinyl chloride or the like, an adhesive used for work of the wallpaper and the like and the adjustment of moisture within a room or within a predetermined space and further have a deodorizing effect. The articles also have values as decorative items which are excellent in coloring and fungal resistance.

### EXPLANATION OF REFERENCE NUMERALS

1 design member
2 sub-design member
3 string-shaped bamboo
4 decorative surface forming material
5 lime plaster layer
5a side surface
6 tea can
7 sub-design member
8 rush
9 decorative surface forming material
10 lime plaster layer
10a side surface
11 tea can
12 design member
13 sub-design member
14 bamboo
15 rust
16 decorative surface forming material
17 lime plaster layer
17a side surface
18 base sheet
19 dressing box
20, 21 design member
22 bamboo
23 decorative surface forming material
24 lime plaster layer
24a side surface
25, 26 design member
27 decorative surface forming material
28, 29 lime plaster layer
28a, 29a side surface
30 decorative surface forming material
31 tissue paper box
32 decorative surface layer
33 base material sheet
34 design member
35 small piece
36 base sheet
37 lime plaster layer
37a side surface
38 basket
39 jewelry box
40 hand box
41 picture frame
42 crocodile

## Claims

1. A decorative surface forming material wherein the decorative surface forming material is formed with a design member formed by bonding a decorative surface layer made of lime plaster on a base material sheet, and a decorative surface is formed by assembling a plurality of the design members so as to form recesses and projections in the decorative surface.

2. The decorative surface forming material according to claim 1, wherein the decorative surface is formed with both the design member formed by bonding the decorative surface layer made of the lime plaster on the base material sheet and a sub-design member made of a material other than the lime plaster.

3. The decorative surface forming material according to claim 2, wherein the design member formed by bonding the decorative surface layer made of the lime plaster on the base material sheet is a tape-shaped design member, the sub-design member made of the material other than the lime plaster is a long sub-design member, the design member is used as a warp kitting member or a weft knitting member and the sub-design member is used as the weft knitting member or the warp kitting member and the design member and the sub-design member are woven so as to be assembled such that the decorative surface having the recesses and projections is formed.

4. The decorative surface forming material according to claim 3, wherein the sub-design member made of the material other than the lime plaster is formed of rush or string-shaped or tape-shaped bamboo or is formed of both the rush and the string-shaped or tape-shaped bamboo, and is used as the single weft knitting member or the single warp kitting member, and a single or a plurality of the sub-design members are used so as to be woven.

5. The decorative surface forming material according to claim 1, wherein the design member formed by bonding the decorative surface layer made of the lime plaster on the base material sheet is a tape-shaped design member, and the tape-shaped design members are woven as a warp kitting member and a weft knitting member so as to be assembled such that the decorative surface having the recesses and projections is formed.

6. The decorative surface forming material according to claim 5, wherein the design member formed by bonding the decorative surface layer made of the lime plaster on the base material sheet is used as the warp kitting member and the weft knitting member, the warp kitting member and the weft knitting member are colored in different colors and the design members are woven so as to be assembled such that the decorative surface is checkered.

7. The decorative surface forming material according to claim 1, wherein a base sheet is adhered to a back surface which is a side opposite to the decorative surface of the decorative surface forming material according to any one of claims 2 to 6.

8. The decorative surface forming material according to claim 1, wherein the decorative surface forming material according to any one of claims 2 to 6 is adhered to both side surfaces of a base sheet such that the decorative surface layer made of the lime plaster is the decorative surface.

9. The decorative surface forming material according to claim 1, wherein the design member formed by bonding the decorative surface layer made of the lime plaster on the base material sheet is tape-shaped, on the decorative surface layer made of the lime plaster in the tape-shaped design member, small pieces of the design member are adhered at predetermined intervals and a plurality of the tape-shaped design members to which the small pieces are adhered are assembled and adhered on a base sheet such that the decorative surface having the recesses and projections is formed.

10. The decorative surface forming material according to claim 9, wherein the tape-shaped design members to which the small pieces of the design member are adhered at the predetermined intervals are assembled and adhered on the base sheet such that the small pieces are arranged so as to be checkered.

11. An article wherein the article is decorated by coating an outside or an inside of the article or at least part of surfaces of the outside and the inside with the decorative surface forming material according to any one of claims 1 to 10 or by forming a housing of the article with the decorative surface forming material according to any one of claims 1 to 10.

12. The article according to claim 11, wherein the article which is decorated is any one of a tea can, a dressing can, a dressing box, a jewelry box, a sewing box, a costume box, a shoe box, a chopstick box, a tissue paper box, a savings box, a first-aid kit, a hand box, a figurine and a picture frame.
